Europäisches Patentamt

European Patent Office

Office européen des brevets

(11) Veröffentlichungsnummer: **0 424 948 A2**

# EUROPÄISCHE PATENTANMELDUNG

(21) Anmeldenummer: 90120551.8

(22) Anmeldetag: 26.10.90

(51) Int. Cl.5: **B29C 65/04**, //B29K23:00, B29K67:00

(30) Priorität: 27.10.89 DE 3936324

(43) Veröffentlichungstag der Anmeldung: 02.05.91 Patentblatt 91/18

(84) Benannte Vertragsstaaten: AT BE CH DE DK ES FR GB GR IT LI LU NL SE

(71) Anmelder: **ALFRED SCHWALBACH GmbH Virchowstrasse 8 W-2000 Hamburg 50(DE)**

(72) Erfinder: **Zeigermmann, Erst-Otto Botterbarg 85 W-2000 Hamburg 55(DE)**

(74) Vertreter: **Vonnemann, Gerhard Dr.-Ing. et al Meyer, Stach, Vonnemann Patentanwälte Jungfernstieg 38 W-2000 Hamburg 36(DE)**

(54) Verfahren und Maschine zum Hochfrequenzschweissen von Polyolefinen.

(57) Die Erfindung betrifft ein Verfahren zum Schweißen von Thermoplastfolien mit niedrigem dielektrischen Verlustfaktor mittels Hochfrequenz, wobei die Folie zwischen mindestens einer, ein Schweißwerkzeug tragenden Elektrode und einer Gegenelektrode unter Zuhilfenahme einer wärmeentwickelnden Zwischenschicht und einer Isolationsschicht unter Druck verschweißt wird, wobei zwischen der zu schweißenden Folien mit niedrigem dielektrischen Verlustfaktor, insbesondere PP, und der Gegenelektrode mindestens eine Schicht aus einer 0,3 mm übersteigenden Gesamtdicke aus PETP (Hostaphan) als gleichzeitig isolierende und wärmeentwickelnde Schicht, eingebracht wird sowie eineMaschine zur Durchführung des Verfahrens, wobei zwischen dem zu schweißenden Kunststoff und der Gegenelektrode mindestens eine Isolierschicht von einer 0,3mm übersteigenden Gesamtdicke aus PETP angeordnet ist und schließlich die Verwendung einer HF-Schweißmaschine.

EP 0 424 948 A2

# VERFAHREN UND MASCHINE ZUM HOCHFREQUENZSCHWEISSEN VON POLYOLEFINEN.

Die Erfindung betrifft ein Verfahren zum Schweißen von Thermoplastfolien mit niedrigem dielektrischen Verlustfaktor mittels Hochfrequenz, insbesondere PP, wobei die Folien zwischen mindestens einer ein Schweißwerkzeug tragenden Elektrode und ein Gegenelektrode unter Zuhilfenahme einer wärmeentwickelnden Zwischenschicht und einer Isolationsschicht unter Druck verschweißt werden sowie eine Maschine zur Durchführung des Verfahrens.

Ein derartiges Verfahren ist aus der US-PS 3,126,307 bekannt. Dabei wird als Zwischenschicht ein Puffermaterial benutzt, das eine niedrigere Erweichungstemperatur als die Thermoplastfolien besitzt und nur auf einer Seite des zu schweißenden Materials eingebracht wird. Das Puffermaterial ist vorzugsweise in einem dicht gewebten organischen Fasermaterial gebunden. Auf der anderen Seite des zu schweißenden Materials wird ein Isolationsmaterial eingebracht, das einen ausreichend dielektrischen Verlustfaktor aufweist, um nicht beim Schweißen zu erweichen. Das Puffermaterial und das Isoliermaterial muß so beschaffen sein, daß sie sich nicht mit dem zu schweißenden Gut verbinden. Als Puffermaterial wird Polyvinylchlorid mit einem möglichst hohen dielektrischen Verlustfaktor empfohlen. Es ist seiner geringen Erweichungstemperatur wegen deshalb in einem dicht gewebten organischen Fasermaterial gebunden, das die notwendige mechanische Stabilität zur Verfügung stellt und verhindert, daß das PVC bei der Schweißtemperatur davonfließt. Das Isolationsmatertial dagegen hat einen so geringen dielektrischen Verlustfaktor, daß es bei der Schweißtemperatur nicht erweicht. Als brauchbar werden Isolationsmaterialien wie Polyamid, Nylon, Polyester, Polyethylen und Celluloseacetat bezeichnet. Die beschriebene Kombination von Puffermaterial und Isolationsmaterial auf beiden Seiten des Schweißgutes erlaubt es, die Feldstärke relativ gering und wesentlich unter dem Durchbruchpotential der Gesamtkombination zu halten.

Nachteilig an diesem bekannten Verfahren ist, daß das verwendete Puffermaterial nur eine Standzeit von ca. 1000 Schweißungen besitzt. Bei den im Betrieb befindlichen Schweißautomaten bedeutet das, daß das Puffermaterial in kurzen Zeitabständen auszuwechseln wäre. Die dazu nötigen Stillstandzeiten beeinträchtigen die Produktivität in wirtschaftlich unerträglicher Weise.

Für die Massenproduktion von Gegenständen aus geschweißten Folien werden die Folien von der Rolle verarbeitet. Neben dem Schweißvorgang ist meist auch ein Stanzvorgang entlang der Schweißnaht erforderlich. Aus Produktivitätsgründen werden diese Arbeitsvorgänge bei modernen Schweißautomaten in einem Arbeitgang vereinigt. Das aus US-PS 3,126,307 bekannte Verfahren macht jedoch die Trennung dieser beiden Arbeitsvorgänge notwendig, da zwischen dem in modernen Automaten stanzenden Oberwerkzeug und der zu schweißenden Folie das Puffermaterial und auf der gegenüberliegenden Seite Isolationsmaterial angeordnet ist.

Aus der DE-OS 38 07 164 ist ein Verfahren und eine Vorrichtung zum Verschweißen von halogenfreien Thermoplastfolien, insbesondere PP- oder PE-Folien bekannt, wobei den Folien mit einem erwärmbaren Schweißwerkzeug durch eine wärmeleitende Trennfolie hindurch die zu ihrer Plastifizierung erforderliche thermische Energie zugeleitet wird.

Nachteilig an diesem Verfahren ist, daß die Oberflächengüte der Nähte qualitativ nicht den Schweißnähten entspricht, wie sie mittels Hochfrequenz bei PVC herstellbar sind. Ebenso werden keine vergleichbaren Taktzeiten erreicht. Schließlich sind die infolge der Verwendung hoher Temperaturen beim Schweißen entstehenden Dämpfe bei der Verarbeitung lästig.

Aus Abele G.F., Hochfrequenz-Schweißtechnik, 2. Auflage, 1973, S.319-326, ist die Verwendung von PETP als Isolierstoff beim HF-Schweißen von PVC-Folien bekannt. Ferner wird eine Isolierstärke von 0,1 bis 0,5 mm mit Schwerpunkt bei 0,3 mm oder kleiner empfohlen.

Aufgabe der Erfindung ist es, ein Verfahren und eine Vorrichtung anzugeben, mit der es möglich ist, die Vorteile der Hochfrequenzschweißtechnik auch bei Thermoplastfolien mit niedrigem dielektrischem Verlustfaktor anzuwenden. Insbesondere soll ein Verfahren und eine Maschine geschaffen werden, die es ermöglicht, Polypropylen mittels Hochfrequenz zu schweißen.

Die Verfahrensaufgabe wird durch die Merkmale des Patentanspruchs 1 gelöst.

Vorteilhaft läßt sich die erfindungsgemäß vorgesehene zusätzliche Isolierschicht zum Verschweißen von Polypropylenfolien auch beim Hochfrequenz-Rollschweißen anwenden, wie es beispielsweise in der DE-OS 33 11 909 beschrieben ist. Die Erfindung läßt sich bei Resonanzsystemen unsymmetrischer oder symmetrischer Art vorteilhaft anwenden.

Das erfindungsgemäße Verfahren und die Vorrichtung zur Durchführung des Verfahrens ermöglichen erstmalig Polypropylenfolien auf modernen hochproduktiven Schweißautomaten, wie sie bisher beispielsweise zum Schweißen von PVC verwendet wurden, zu verarbeiten, insbesondere auch beim sogenannten Trennschweißen und für Randlos-Schweißungen. Eine Beheizung des Schweißwerkzeugs und/oder der Gegenelektrode, vorzugsweise auf eine Temperatur zwischen 105°C und 140°C, insbesondere 120°C und 130°C, ermöglicht verkürzte Taktzeiten.

In Ausgestaltung der Erfindung ist vorgesehen, daß mindestens zwei Schichten aus PETP eingebracht werden, von denen eine Schicht gleichzeitig mit dem zu schweißenden Kunststoff bewegt wird und eine zweite Schicht ortsfest auf der Gegenelektrode gehalten wird. Auf diese Weise läßt sich das Verfahren auch besonders einfach auf weit verbreitete Hochfrequenzschweißautomaten verwirklichen, beispielsweise zum Schweißen von Sichthüllen und Schnellheftern.

Bei derartigen Schweißautomaten ist ein endloses Band als Transportband der zu schweißenden Folie und als Isolierschicht zwischen Schweißwerkzeug und Gegenelektrode bereits vorhanden. Zum Verschweißen von Polypropylen beispielsweise reicht es dann aus zusätzlich eine entsprechende Schicht auf der Gegenelektrode aufzubringen. Überraschenderweise reicht es, wenn sowohl das Transportband als auch die zusätzliche Isolierschicht eine Stärke von je 0,25 mm aufweisen.

Zur Durchführung des Verfahrens ist eine Maschine geeignet, bei der zwischen dem zu schweißenden Kunststoff und der Gegenelektrode mindestens eine Isolierschicht von einer 0,3mm übersteigenden Gesamtdicke PETP angeordnet ist und daß das Schweißwerkzeug und/oder die Gegenelektrode heizbar ausgebildet ist.

In Ausgestaltung der Maschinen ist vorgesehen, daß die Isolierschicht mehrschichtig, insbesondere zweischichtig, ausgebildet ist. Dieser Schichtaufbau läßt sich besonders einfach auch bei bestehenden Schweißautomaten nachrüsten, wenn eine Schicht gleichzeitig mit dem zu schweißenden Kunststoff bewegend ausgebildet ist und mindestens eine weitere Schicht ortsfest auf der Gegenelektrode angeordnet ist.

Beim Schweißen ist zur Erzielung qualitativ hochwertiger Schweißnähte und kurzer Taktzeiten vorteilhaft, wenn das Schweißwerkzeug und/oder die Gegenelektrode heizbar ausgebildet ist.

Die Erfindung beruht auf der überraschenden Erkenntnis, daß Polypropylenfolien hochfrequenzgeschweißt werden können, wenn PETP von mindestens 0,3mm Dicke, bevorzugt 0,5mm Dicke als Isolierschicht verwendet wird.

Es ist somit gelungen, die Vorteile der Hochfrequenzschweißung erfindungsgemäß auch bei Polyolefinen mit geringem dielektrischen Verlustfaktor zu realisieren. Insbesondere ist es möglich geworden, Polypropylenfolien mittels Hochfrequenz zu schweißen.

Besonders überraschend ist, daß auch Gegenstände aus randlos mittels Hochfrequenz geschweißten PP-Folien, wie beispielsweise PKW-Sonnenschutzblenden, zur Verfügung gestellt werden können.

Die Erfindung läßt sich darüber hinaus zum Schweißen von koextrudierten, mehrschichtigen Kunststoffolien, insbesondere mit einer mittleren Barriereschicht aus PVDC und mit Außenschichten aus Polyolefinen, anwenden.

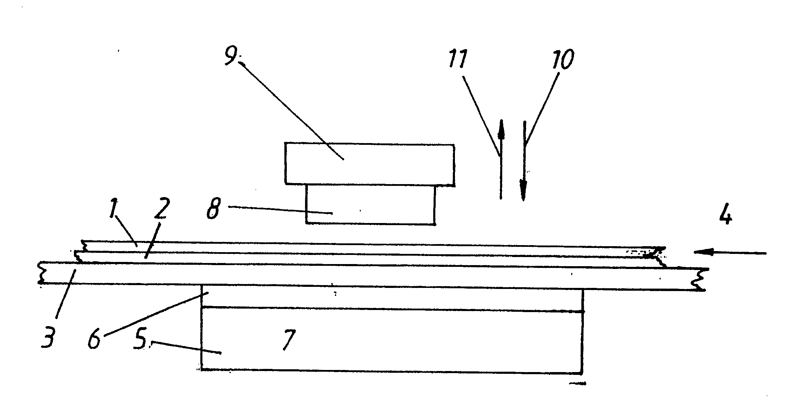

Weitere Vorteile, Einzelheiten und erfindungswesentliche Merkmale ergeben sich aus der nachfolgenden Beschreibung einer bevorzugten Ausführungsform der Erfindung unter Bezugnahme auf die beigefügte Figur.

Die Figur zeigt schematisch eine Frontansicht auf einen Hochfrequenzautomaten mit Folienvorschub. Die zu schweißenden Polypropylenfolien sind mit 1 und 2 bezeichnet. Die beiden Folien liegen auf einem Transportband 3 auf. Mittels nicht dargestellter Greifer werden die beiden Polypropylenfolien zusammen mit den Transportband 3 gegriffen und taktweise um einen voreinstellbaren Vorschub in Pfeilrichtung 4 bewegt. Unterhalb des Transportbandes 3 ist ein Maschinentisch 5 mit einer Isolierschicht 6 angeordnet, auf der das Transportband 3 direkt aufliegt. Der Maschinentisch 5 ist gleichzeitig auch als Gegenelektrode 7 ausgebildet, die in elektrisch leitender Verbindung zu einem Hochfrequenzgenerator steht.

Auf der gegenüberliegenden Seite der Folien 1, 2 steht ein Schweißwerkzeug 8 in direkter leitender Verbindung mit einer Schweißelektrode 9, die ihrerseits elektrisch leitend mit dem Hochfrequenzgenerator verbunden ist, der der Übersichtlichkeit halber nicht dargestellt ist.

Das Schweißwerkzeug 8 wird von der beheizbaren Schweißelektrode 9 durch Wärmeleitung auf ca. 120°C gehalten.

Für den Schweißvorgang wird die Schweißelektrode 9 zusammen mit dem Schweißwerkzeug 8 durch entsprechende, nicht dargestellte, hydraulische Kolben-Zylinder-Einheiten in Pfeilrichtung 10 bewegt, und mit voreinstellbarem Druck auf die zu schweißenden Polypropylenfolien 1 und 2 gepreßt. Dabei wird an die Schweißelektrode 9 und die Gegenelektrode 7 eine entsprechende hochfrequente Spannung gelegt, so daß das entstehende Hochfrequenzfeld die Polypropylenfolien 1 und 2 im Inneren kapazitiv erhitzt und dauerhaft verschweißt. Nach Anheben des Schweißwerkzeugs 8 in Pfeilrichtung 11 wird das Transportband 3 zusammen mit den verschweißten Folien 1 und 2 in Pfeilrichtung verschoben, um neues Material zum Schweißen unter das Schweißwerkzeug 8 zu bringen.

Dadurch, daß das Transportband 3 und die zusätzliche Isolierschicht 6 aus PETP besteht, lassen sich Polypropylenfolien von beispielsweise 0,1mm Stärke bei Taktzeiten von 4 Sekunden ohne Schwierigkeiten hochfrequenzschweißen. Der Elektrodenstrom des Hochfrequenzgenerators (27,12 MHz) liegt etwa bei 4 Ampere.

Positionsliste

| | |
|---|---|
| 1 | Schweißfolie |
| 2 | Schweißfolie |
| 3 | Transportband |
| 4 | Pfeilrichtung (Transport) |
| 5 | Maschinentisch |
| 6 | Isolierschicht |
| 7 | Gegenelektrode |
| 8 | Schweißwerkzeug |
| 9 | Schweißelektrode |
| 10 | Pfeilrichtung |
| 11 | Pfeilrichtung |

**Ansprüche**

1. Verfahren zum Schweißen von Thermoplastofolien mit neidrigem dielektrischen Verlustfaktor mittels Hochfrequenz, wobei die Folie zwischen mindestens einer, ein Schweißwerkzeug tragenden Electrode und einer Gegenelektrode unter Zuhilfenahme einer wärmeentwickelnden Zwischenschicht und einer Isolationsschicht unter Druck verschweißt wird, **dadurch gekennzeichnet,** daß zwischen der zu schweißenden Folie mit niedrigem dielektischen Verlustfaktor, insbesondere PP. und der Gegenelektrode mindestens eine Schicht aus einer 0,3 mm übersteigenden Gesamtdicke aus PETP (Hostaphan) als gleichzeitig isolierende und wärmeentwickelnde Schicht, eingebracht wird.

2. Verfahren nach Anspruch 1, **dadurch gekennzeichnet,** daß eine Beheizung des Schweißwerkzeugs und/oder der Gegenelektrode, vorzugsweise auf eine Temperatur zwischen 105°C und 140°C, insbesondere zwischen 120°C und 130°C, erfolgt.

3. Verfahren nach Anspruch 1 oder 2, **dadurch gekennzeichnet,** daß mindestens zwei Schichten aus PE und/oder PETP eingebracht werden, von denen eine Schicht gleichzeitig mit dem zu schweißenden Kunststoff bewegt wird und eine zweite Schicht ortsfest auf der Gegenelektrode gehalten wird.

4. Maschine zur Durchführung des Verfahrens nach Anspruch 1, 2 oder 3, **dadurch gekennzeichnet,** daß zwischen dem zu schweißenden Kunststoff (1, 2) und der Gegenelektrode (7) mindestens eine Isolierschicht (6, 3) von einer 0,3mm übersteigenden Gesamtdicke PETP angeordnet ist.

5. Maschine nach Anspruch 4, **dadurch gekennzeichnet,** daß die Isolierschicht (3, 6) mehrschichtig, insbesondere zweischichtig, ausgebildet ist.

6. Maschine nach Anspruch 4 oder 5, **dadurch gekennzeichnet,** daß eine Schicht (3) gleichzeitig mit dem zu schweißenden Kunststoff (1, 2) bewegend ausgebildet ist und mindestens eine weitere Schicht (6) ortsfest auf der Gegenelektrode (7) angeordnet ist.

7. Maschine nach Anspruch 4, 5 oder 6, **dadurch gekennzeichnet,** daß das Schweißwerkzeug (8) und/oder die Gegenelektrode (7) heizbar ausgebildet ist.

8. Verwendung von PETP, von mindestens 0,3mm Dicke als Isolierschicht beim HF-Schweißen von Kunststofffolien mit niedrigem dielektrischem Verlustfaktor, wie Polyolefinen, insbesondere PP-Folien, zwischen Folie und Gegenelektrode.

9. Verwendung einer HF-Schweißmaschine mit mindestens einer Isolierschicht aus PE und/oder PETP mit mindestens einer Gesamtdicke von 0,3mm zwischen dem zu schweißenden Kunststoff mit niedrigem dielektrischem Verlustfaktor, wie Polyolefinen, und der Gegenelektrode, insbesondere zum Schweißen von PP-Folien.

10. Produkt aus miteinander verschweißten, ganz oder teilweise aus Polyolefin bestehenden Folien, **dadurch gekennzeichnet,** daß die Folien aus PP bestehen und randlos geschweißt oder trenngeschweißt sind.

EP 0 424 948 A2